(19)

**Europäisches Patentamt**

**European Patent Office**

**Office européen des brevets**

(11) **EP 4 768 195 A1**

(12) **EUROPEAN PATENT APPLICATION**

(43) Date of publication:
01.07.2026   Bulletin 2026/27

(21) Application number: 24223180.1

(22) Date of filing: 24.12.2024

(51) International Patent Classification (IPC):
**B25J 9/16** *(2006.01)*      **G05B 13/04** *(2006.01)*

(52) Cooperative Patent Classification (CPC):
**G05B 13/048; B25J 9/163**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **INTEL Corporation**
**Santa Clara, CA 95054 (US)**

(72) Inventors:
• **ALDANA LOPEZ, Rodrigo**
  **45050 Zapopan (MX)**
• **GOMEZ GUTIERREZ, David**
  **45600 Tlaquepaque (MX)**
• **CAMPOS MACIAS, Leobardo**
  **44240 Guadalajara (MX)**
• **DE LA GUARDIA GONZALEZ, Rafael**
  **48940 Leioa (ES)**

(74) Representative: **Viering, Jentschura & Partner mbB**
**Patent- und Rechtsanwälte**
**Am Brauhaus 8**
**01099 Dresden (DE)**

(54) **DYNAMIC IDENTIFICATION OF NEXT BEST MOTION IN ROBOTIC SYSTEM**

(57)    Disclosed herein are devices, methods, and systems for dynamically updating a robot's system modeling parameters while the robot is working to complete a task. The dynamic modeling system receives a set of performance parameters (e.g., for optimization objectives) associated with a task of a robot, wherein the set of performance parameters comprise a first weight associated with an extent of compliance toward completing the task and a second weight associated with a modeling metric in system modeling parameters of the robot. The dynamic modeling system determines control parameters for moving the robot, wherein the control parameters are based on the extent of compliance in relation to the first weight and based on the modeling metric in relation to the second weight. The dynamic modeling system controls a motion of the robot according to the control parameters.

FIG. 3

## Description

### Background

In robotic systems, accurate control and prediction of a robots' movements often depend on pre-defined models for the robot. Such pre-defined robot models, however, may not necessarily account for every situation that the robot might encounter, and the model may not always be provide the necessary agility and precision for a given robot, especially as the robot may deviate from its pre-defined model as the robot's motors age, as the robot's payload changes, as the robot's manipulators change, as the robot interacts with a human or other robots to complete tasks, as the environment changes, etc. To make such systems more robust, the focus is typically on extensive pre-training (or re-training) of the robot with an extensive and varied set of motions (e.g., a frequency-rich signal that excites as many modes of the system as possible) to gather a rich set of movement data while the robot is not actively engaging in a task. This is typically because the extensive and varied set of motions (e.g., a frequency-rich signal) may result in random/erratic movements that, if performed in real-time while the robot is engaged in its task environment for completing a task, may disrupt task performance or make it unsafe for nearby equipment, other robots, or humans. Thus, improvements to the model are typically done off-line, meaning that the robot may be taken out of service to be re-trained when its conditions change, leading to frequent service interruptions.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:

FIG. 1 shows an example training process for training a neural network in a simulation rollout module that may be used by a dynamic modeling system of a robot;
FIG. 2 illustrates an example of how, during training, the dynamic modeling system may train the neural network over a number of simulations using different initial conditions;
FIG. 3 provides an example of an online implementation of a dynamic modeling system for determining system modeling parameters while the robot is performing a task, and based thereon, determine the next best motion (NBM) for the robot;
FIG. 4 shows a robot system used for executing experiments to show how a dynamic modeling system may perform as compared to other robot modeling systems;
FIG. 5 depicts a state trajectory plot and a control input trajectory plot in an experiment executed on the robot system of FIG. 4 according to a dynamic modeling system using a first set of performance parameters;
FIG. 6 depicts a state trajectory plot and a control input trajectory plot in an experiment executed on the robot system of FIG. 4 according to a dynamic modeling system using a second set of performance parameters;
FIG. 7 illustrates an exemplary schematic drawing of a device for a dynamic modeling system; and
FIG. 8 depicts an exemplary schematic flow diagram of a method for a dynamic modeling system.

### Description

The following detailed description refers to the accompanying drawings that show, by way of illustration, exemplary details and features.
The word "exemplary" is used herein to mean "serving as an example, instance, or illustration". Any aspect or design described herein as "exemplary" is not necessarily to be construed as preferred or advantageous over other aspects or designs.
Throughout the drawings, it should be noted that like reference numbers are used to depict the same or similar elements, features, and structures, unless otherwise noted.
The phrase "at least one" and "one or more" may be understood to include a numerical quantity greater than or equal to one (e.g., one, two, three, four, [...], etc., where "[...]" means that such a series may continue to any higher number). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.
The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.*, any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g.*, the transmission of radio signals) and logical transmission (*e.g.*, the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

As used herein, the terms "display," "monitor," "television," "video display," "screen," etc. refer to a hardware device that illuminates in order to display a series of images or frames. The illumination may be direct (such as with a cathode ray tube (CRT) display, a liquid crystal (LCD) display, light-emitting diode (LED) display, etc.) or indirect (such as with a projector or other projection methods). As should be understood, most displays are configured to receive a stream of digital video information that represents a set of continuous video frames, where each frame may contain a digital representation of the image to be displayed (e.g., "active" pixels in a horizonal and vertical dimension of the active/visible portion of the frame) and control or other information that is not part of the active/visible portion of the image to be displayed but nevertheless make up the overall size of the frame (e.g., horizontal/vertical blanking of lines, columns, pixels, etc.).

As used herein a "robot" may be understood to include any type of digitally controllable machinery that may be designed to perform a task or tasks. By way of example, a robot may be an autonomous mobile robot (AMR) that may move within an area (e.g., a manufacturing floor, an office building, a warehouse, etc.) to perform a task or tasks; or a robot may be understood as an automated machine with one or more end-effectors, arms, tools, and/or sensors that may perform a task or tasks at a fixed location; or a combination thereof. A robot may be understood as an automated or partially automated vehicle such as an automobile, a bus, a mini bus, a van, a truck, a mobile home, a vehicle trailer, a motorcycle, a bicycle, a tricycle, a train locomotive, a train wagon, a robot, a personal transporter, a boat, a ship, a submersible, a submarine, a drone, an aircraft, industrial machinery, autonomous or partially autonomous machinery, or a rocket, among others.

Various embodiments herein may utilize one or more machine learning models to perform functions of the robot (or other functions described herein). The term "model" as, for example, used herein may be understood as any kind of function or algorithm, which provides output data from input data. In a robot system, for example, a motion model may be defined by system modeling parameters, where the motion model relates sates of the robot system to its excitation as a function of the system modeling parameters. The goal of the motion model is to accurately describe the motion of the robot over the range of possible states and excitations. A machine learning model may be executed by a computing system to progressively improve performance of a specific task (also called compliance to the task). In some aspects, parameters of a machine learning model may be adjusted during a training phase based on training data and a trained machine learning model may then be used during an inference phase to make predictions or decisions based on input data. In some aspects, the trained machine learning model may be used to generate additional training data and an additional machine learning model may be adjusted during a second training phase based on the generated additional training data. A trained additional machine learning model may then be used during an inference phase to make predictions or decisions based on input data.

The machine learning models described herein may take any suitable form or utilize any suitable techniques. For example, any of the machine learning models may utilize supervised learning, semi-supervised learning, unsupervised learning, or reinforcement learning techniques.

In supervised learning, the model may be built using a training set of data that contains both the inputs and corresponding desired outputs. Each training instance may include one or more inputs and a desired output. Training may include iterating through training instances and using an objective function to teach the model to predict the output for new inputs. In semi-supervised learning, a portion of the inputs in the training set may be missing the desired outputs.

In unsupervised learning, the model may be built from a set of data which contains only inputs and no desired outputs. The unsupervised model may be used to find structure in the data (e.g., grouping or clustering of data points) by discovering patterns in the data. Techniques that may be implemented in an unsupervised learning model include, e.g., self-organizing maps, nearest-neighbor mapping, k-means clustering, and singular value decomposition.

Reinforcement learning models may be given positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various embodiments described herein may utilize one or more classification models. In a classification model, the outputs may be restricted to a limited set of values. The classification model may output a class for an input set of one or more input values. An input set may include sensor data, such as image data, radar data, LIDAR data and the like. A classification model as described herein may for example classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various embodiments described herein may utilize one or more regression models. A regression model may output a numerical value from a continuous range based on an input set of one or more values. References herein to regression models may contemplate a model that implements, e.g., any one or more of the following techniques (or other suitable techniques): linear regression, decision trees, random forest, or neural networks.

A machine learning model described herein may be a neural network. The neural network may be any kind of neural network, such as a convolutional neural network, an autoencoder network, a variational autoencoder network, a sparse autoencoder network, a recurrent neural network, a deconvolutional network, a generative adversarial network, a forward thinking neural network or a sum-product neural network and the like. The neural network may include any number of layers and the training of the neural network, e.g. adapting the layers of the neural network, may be based on any kind of training principle, such as backpropagation, e.g. a backpropagation algorithm.

As noted earlier, a robot's system modeling parameters (e.g., its system model) may not accurately represent the robot because the motion model may have not been trained on every situation that the robot might encounter or the robot may deviate from its predefined motion model as the robot's motors age, as the robot's payload changes, as the robot's manipulators change, as the robot interacts with a human or other robots to complete tasks, as the environment changes, etc. Because adaptions to or re-training of a robot's motion model (e.g., updating its system modeling parameters) are typically done off-line, meaning that the robot may be taken out of service to be re-trained on a new task, for new conditions, for a new environment, etc., this may lead to frequent service interruptions. Thus, such off-line adaptions/re-training may not be suitable.

To address this, a dynamic modeling system is disclosed in more detail below that may provide a way of adapting/re-training the robot's motion model (e.g., updating/re-estimating its system modeling parameters) while the robot is also working towards completing a task. This means that the dynamic modeling system may select movements for the robot (e.g., the next best motion) in manner that balances two competing objectives: (1) improving the robot's motion model and (2) completing its assigned task (or extent of compliance thereto). The dynamic modeling system may use an iterative estimation of the system modeling parameters (e.g., using an iterative Bayesian estimation with Model Predictive Control (MPC)) integrated with a neural network-based controller to create tailored reinforcement learning for optimizing these two competing objectives. This means that the dynamic system may use the information available about the motion model (e.g., the error of the motion model (e.g., an estimation error, a covariance of the system modeling parameter matrix, an accuracy of the motion model, etc.) or the identification effort for estimating the system modeling parameters of the motion model) in order to make determinations about the robot's next movements, which means choosing a next movement (e.g., along a trajectory for completing the task) that not only benefits compliance toward task completion but also enhances the motion model (e.g., to better cover the parameter space, to yield a shorter trace in the parameter matrix, to improve identification effort, to yield a lower covariance in the parameter matrix, to improve its accuracy, etc.).

Balancing these two objectives (e.g., by minimizing their cumulative "cost" according to a cost function that relates at least these two objectives with corresponding level of importance (e.g., weights)) may ensure that the robot is in compliance with achieving its operational goals (e.g., compliance in task completion) while also being able to refine the robot's motion model to adapt to changes in the robot over time (e.g., the task type, its environment, etc.) so as to continually improve in real-time the motion model's performance (e.g., reduce its error in terms of reduced covariance of the system modeling parameter matrix, reduce the model's identification effort, and/or improve its accuracy in modeling robot's motion). As should be appreciated, other objectives may be taken into account such as the amount of effort it takes to improve the motion model (e.g., the identification effort for estimating the system modeling parameters (e.g., computational effort)), where the other objectives may also have their own corresponding weight. In addition, while weighting is described as one example of how the importance of various objectives may be balanced against one another, other factors, formulas, rules, or relationships may be used to balance the objectives and their associated costs.

To do this, the dynamic modeling system determines the next best motions (e.g., the next movements of the robot toward completing a task) in a way that may improve the system modeling parameters as well as improve the extent of compliance in task completion (or improves any other performance metric that has been specified). In comparison to conventional systems, one benefit is that the dynamic system not need to be taken off-line for adaption/re-training (e.g., to characterize the robot over an extensive set of stimulated input signals or to be re-trained with pre-defined motion patterns). Due to the system's ability to dynamical improve the robot's model while the robot is performing its tasks, the system may practically and efficiently adapt to highly dynamic environments (e.g., a manufacturing line where the task or environment changes frequently) without having to sacrifice task compliance/completion (e.g., without having to take the robot out of service to perform an "off-line" training).

The dynamic modeling system allows for simultaneous, accurate, and online parameter identification of system modeling parameters during the robot's normal operation toward completion of tasks. This does not require a separate identification process for identifying the system modeling parameters for the robot, which is traditionally done by an expert after the robot has been taken "offline" and no longer performing its normal tasks. This is because the dynamic modeling system chooses, during normal operation of the robot in completing a task, which motions the robot should make to improve the system modeling parameters so that robot need not rely on precomputed (or separately performed) persistent excitation motions to estimate/identify the system modeling parameters. In addition, the dynamic modeling system may be learning-based, providing flexibility to prioritize different objectives (e.g., objective to improve system modeling parameters and the objective of compliance in task completion). In this sense, the dynamic modeling system may deprioritize or switch off (e.g., by lowering or zeroing its associated weight) the objective to improve system modeling parameters, when improvements to system modeling parameters may not be needed or when task completion may need to be prioritized. Alternatively, the prioritization may be performed automatically by the dynamic modeling system based on other factors. For example, by reducing its priority gradually when approximating the control set point.

As should be understood, the dynamic modeling system does not require any additional sensors and it may use standard sensors already found in most robot manipulator platforms such as encoders. In addition, a library of different pre-trained solutions may be stored in the dynamic modeling system that are for predefined payloads, predefined end effectors, predefined tasks, or other predefined characteristics. The dynamic modeling system may detect the robot's current scenario (payload, end effector, task, etc.) based on a transient in the identification of system modeling parameters and the best controller may then be used for that case. In addition, the dynamic modeling system may track changes in the covariance of the system modeling parameters or in the identification effort for estimating the system modeling parameters over time, which may be useful to the dynamic modeling system to inform decisions about whether a robot or its components are worn, have been damaged, require maintenance, etc.

As discussed in more detail below, the dynamic modeling system may dynamically select the next best motion (NBM) using iterative Bayesian estimation combined with model predictive control (MPC) and a neural network-based controller to create a tailored reinforcement learning approach that optimizes both modeling parameter identification accuracy and compliance in task completion in real-time, allowing the robot to adapt to environmental changes while effectively performing its tasks. As such, the dynamic modeling system may choose motions that better estimate its system modeling parameters (e.g., in terms of accuracy, state space, identification effort, etc.) while still completing its assigned task (e.g., planning movements toward compliance in completing a task), ensuring better performance, reduced downtime, and increased reliability of the robot.

A robotic system may be modeled using Euler-Lagrange dynamics as:

$$M(q)\ddot{q} + C(q,\dot{q}) + G(q) = \tau + \tau_d$$

In the formula above, $q$ represents the joint coordinates of the robot; $M, C, G$ are the mass, Coriolis and gravity matrices/vectors respectively; $\tau$ is the input injected into the robotic system due to actuation; and $\tau_d$ represents disturbances or non-modeled dynamics.

In general, $M, C, G$ may be linear combinations of nonlinear functions of the state, in terms of coefficients $\alpha_1, \dots \alpha_r$, $\beta_1, \dots, \beta_s$, nonlinear matrices $\phi_0, \dots, \phi_r$ and nonlinear vectors $\sigma_1, \dots \sigma_s$, and thus:

$$M(q) = \sum_{i=1}^{r} \alpha_i \phi_i(q), \qquad C(q, \dot{q}) + G(q) = \sum_{i=1}^{s} \beta_i \sigma_i(q, \dot{q})$$

In terms of determining/estimating the system modeling parameters for a robot, a goal may be to estimate $\alpha_1, \dots \alpha_r, \beta_1, \dots, \beta_s$, where one approach is the following. First, the system dynamics may be rearranged as:

$$[\phi_1(q)\ddot{q}, \dots \phi_r(q)\ddot{q}, \sigma_1(q, \dot{q}), \dots, \sigma_s(q, \dot{q})] \begin{bmatrix} \alpha_1 \\ \vdots \\ \alpha_r \\ \beta_1 \\ \vdots \\ \beta_s \end{bmatrix} = R(q, \dot{q}, \ddot{q})\gamma = \tau + \tau_d$$

Then, using state data, the system modeling parameter vector $\gamma$ may be represented as:

$$\begin{bmatrix} R(q^{(1)}, \dot{q}^{(1)}, \ddot{q}^{(1)}) \\ \vdots \\ R(q^{(D)}, \dot{q}^{(D)}, \ddot{q}^{(D)}) \end{bmatrix} \gamma = R_D\gamma = \begin{bmatrix} \tau^{(1)} \\ \vdots \\ \tau^{(D)} \end{bmatrix} + \begin{bmatrix} \tau_d^{(1)} \\ \vdots \\ \tau_d^{(D)} \end{bmatrix} = \tau_D + \tau_{D,d}$$

So, with a dataset of $D$ data points, the i-th datapoint may contain $q^{(i)}, \dot{q}^{(i)}, \ddot{q}^{(i)} \tau^{(i)}$ and $\tau_d^{(i)}$ may be unknown.

Based on this dataset, a data-driven estimation of $\gamma$ can be computed as $\hat{\gamma} = R_D^{\dagger} \tau_D$, where $R_D^{\dagger}$ is the pseudo-inverse of $R_D$. If $\tau_D$ is assumed to be white noise, then, the mean-squared-error (MSE) of such an estimation of the system modeling parameter may be computed using the covariance of the parameter vector:

$$\text{MSE}(\hat{\gamma}) = \text{trace}\big(\text{cov}(\hat{\gamma} - \gamma)\big) = \text{trace}\left( R_D^{\dagger} (R_D^{\dagger})^{\top} \right)^{-1}$$

To estimate the parameters, an excitation input $\tau$ is typically introduced into the robotic system, in order to excite different modes of the robotic system, from which state data is collected. Typically, a persistent excitation is used so that a large set of modes are excited across the state space, helping to ensure that appropriate $\gamma$ estimation is obtained. However, persistent excitation across a large set of modes may not possible when the robot is executing a task. For example, certain modes may be dangerous, not allowed for the current task, may cause collisions, etc. Thus, such persistent excitation of the robot is usually performed off-line and outside of the normal operating environment. While persistent excitation may be robust, the downside is that the robot must be taken out of service during persistent excitation and cannot work toward compliance in complete tasks while the system modeling parameters are estimated.

Rather than off-line excitation, the dynamic modeling system disclosed herein may be able to estimate system modeling parameters even while the robot is working to complete its tasks. With reference to the robot system model and system modeling parameters, the accuracy of the estimation of system modeling parameters may be directly related to trace $\left( R_D^{\dagger} (R_D^{\dagger})^{\top} \right)$. In addition, this quantity may directly depend on the injected inputs. Hence, given that the robot may need to make movements within a state space to perform its task (e.g., to move from point A to B), the dynamic modeling system may determine appropriate control actions to make the particular movements (e.g., to traverse different states of the robot system over time as it moves from point A to B) so as to reduce the expected error trace $\left(R_D^{\dagger}\left(R_D^{\dagger}\right)^{\top}\right)$ of the system modeling parameters. At each point in time, the dynamic modeling system may determine the best next motion that balances the objective of completing the task and of improving the system modeling parameters (and any other objective specified by the performance parameters).

In a first aspect, the dynamic modeling system may estimate modeling system parameters "on the fly" or in real time as the robot is moving to complete its assigned task. This may be done using an information fusion approach. For example, let $\hat{\gamma}_{k-1}$ be the current estimation of the modeling system parameters at time k - 1 and $P_{k-1}$ its covariance matrix. Assume that a new data point about the state of the robot arrives at time k, that state data is $q^{(k)}, \dot{q}^{(k)}, \ddot{q}^{(k)}, \tau^{(k)}$. The dynamic modeling system may make a new estimate of the system modeling parameters (only) the new data point according to:

$$\check{\gamma}_k = R\big(q^{(k)}, \dot{q}^{(k)}, \ddot{q}^{(k)}\big)\tau^{(k)},$$

$$\check{P}_k = \mathrm{cov}(\check{\gamma}_k - \gamma) \approx \left(R\big(q^{(1)}, \dot{q}^{(1)}, \ddot{q}^{(1)}\big)R\big(q^{(1)}, \dot{q}^{(1)}, \ddot{q}^{(1)}\big)^T + \epsilon I\right)^{-1}$$

The formula above may include a small $\varepsilon$ to avoid numerical instability. Using information fusion, the joint estimate based on the two pieces of information $\hat{\gamma}_{k-1}, \check{\gamma}_k$ as:

$$P_k = f_P\big(P_{k-1}, \check{P}_k\big) := \big(P_{k-1}^{-1} + \check{P}_k^{-1}\big)^{-1}$$

$$\hat{\gamma}_k = f_\gamma\big(P_{k-1}, \hat{\gamma}_{k-1}, \check{P}_k, \check{\gamma}_k\big) := P_k(P_{k-1}^{-1}\hat{\gamma}_{k-1} + \check{P}_k^{-1}\check{\gamma}_k)$$

Given the formulation before, $\check{P}_k^{-1} = R\big(q^{(1)}, \dot{q}^{(1)}, \ddot{q}^{(1)}\big)R\big(q^{(1)}, \dot{q}^{(1)}, \ddot{q}^{(1)}\big)^T$ may be used directly without computing an inverse.

In a second aspect, the dynamic modeling system may choose the next best motion for the robot by using, for example, a model predictive control approach. Let $x = [q^T, \dot{q}^T]^T$ and $x_k = x(t_k)$ with sampling time $t_k$, and $x_{ref,k}$ denote a reference related to the task that needs to be performed (e.g., representing the extent of compliance toward completion of the task at a given point in time). Thus, the dynamics of the robot may be:

$$x_{k+1} = f_x(x_k, \tau_k; \gamma)$$

Then, to select the next best control input $\tau_k$, the dynamic modeling system may aim to solve an optimization problem, such as the following optimization problem in a model predictive control (MPC) fashion:

$$(\tau_k^*, \dots \tau_{k+N}^*) = \mathrm{argmin}_{\tau_k^*, \dots \tau_{k+N}^*} \; E_{\gamma, \tau_d}\left(\sum_{i=k}^{k+N} \lambda_x\big(x_i - x_{\mathrm{ref},i}\big)^T Q\big(x_i - x_{\mathrm{ref},i}\big) + \lambda_P \mathrm{trace}(P_i)\right)$$

In this optimization problem, $E_{\gamma, \tau_d}(\cdot)$ represents the expected value over the uncertainty, given by the disturbance $\tau_d$ and the system modeling parameter $\gamma$ and the extent of its error (e.g., estimation error or covariance). In the formula above, the first term (multiplied by $\lambda_x$) promotes task compliance while the second term (multiplied by $\lambda_P$) promotes a reduction in the covariance of the system modeling parameters (e.g., to reduce the error or other metric of the system modeling parameters). The tradeoff between these two possibly conflicting objectives is balanced by the weights $\lambda_x, \lambda_P > 0$.

Because the actual system modeling parameters are not known, the state $x_k$ over the time window [k, k + N] may not be predicted. Hence, the dynamic modeling system may estimate the state by propagating a state estimation over the system as well as the estimation $\hat{\gamma}_k$ of $\gamma$, according to:

$$(\hat{x}_{k+1}, X_{k+1}) = U[f_x](\hat{x}_k, X_k, \tau_k; \hat{\gamma}_k, P_k)$$

In the formula above, $U[f_x]$ is the unscented transform of $f_x$, and $X_k$ is the covariance of the state estimate $\hat{x}_k$. Here, the covariance matrices $P_k, X_k$ are propagated by one time point over the nonlinear function $f_x$, which results in the correct state at the next time point up to second order in the Taylor series of $f_x$. As should be understood, while the unscented transform is used as an example of uncertainty propagation, other uncertainty propagation schemes may be used, including, for example, particle propagation as in a particle filter.

The problem may be approximated, subject to the dynamics described above, as:

$$(\tau_k^*, \dots \tau_{k+N}^*) = \mathrm{argmin}_{\tau_k^*, \dots \tau_{k+N}^*} \sum_{i=k}^{k+N} \lambda_x (\hat{x}_i - x_{\mathrm{ref},i})^T Q (\hat{x}_i - x_{\mathrm{ref},i}) + \mathrm{trace}(\hat{X}_k Q) + \lambda_P \mathrm{trace}(P_i)$$

In a third aspect, a neural controller or other learning model may be used for nonlinear optimization. Given that this optimization problem may be highly nonlinear, a neural controller may be used to effectively and efficiently solve the optimization problem. The structure of a neural controller may be abstracted, for some small window length L of previous known state samples of the state and some nonlinear function $g(\cdot)$, as:

$$\tau_k = g(z_{k-L}, \dots, z_k, x_{\mathrm{ref},k})$$

Here, $z_k$ is a state variable containing $\hat{x}_k, X_k, \hat{\gamma}_k, P_k$. The function $g$ may be approximated using a multilayer perceptron neural network as $\hat{g}(z_{k-L}, \dots, z_k, x_{ref,k}; \theta)$ for some parameters $\theta$. Then, the dynamic modeling system may train the neural controller as indicated below.

First, for given network parameters $\theta_\ell$ at epoch $\ell$, the dynamic modeling system may select M initial conditions in the state space and simulate the system for $z_k$ using the dynamics of each part of the state, over a time period N. For each initial condition, the cost $\sum_{i=k}^{k+N} \lambda_x (\hat{x}_i - x_{\mathrm{ref},i})^T Q (\hat{x}_i - x_{\mathrm{ref},i}) + \mathrm{trace}(\hat{X}_k Q) + \lambda_P \mathrm{trace}(P_i)$ may be computed and accumulated into a joint cost $J(\theta_\ell)$ (also called an accumulated cost) which adds up the cost of all trajectories for all initial conditions. Finally, the error may be backpropagated over the cost $J(\theta_\ell)$ to update the weights $\theta_\ell$. It should be understood that M may be relatively large because the systems may be simulated in parallel (e.g. in the GPU).

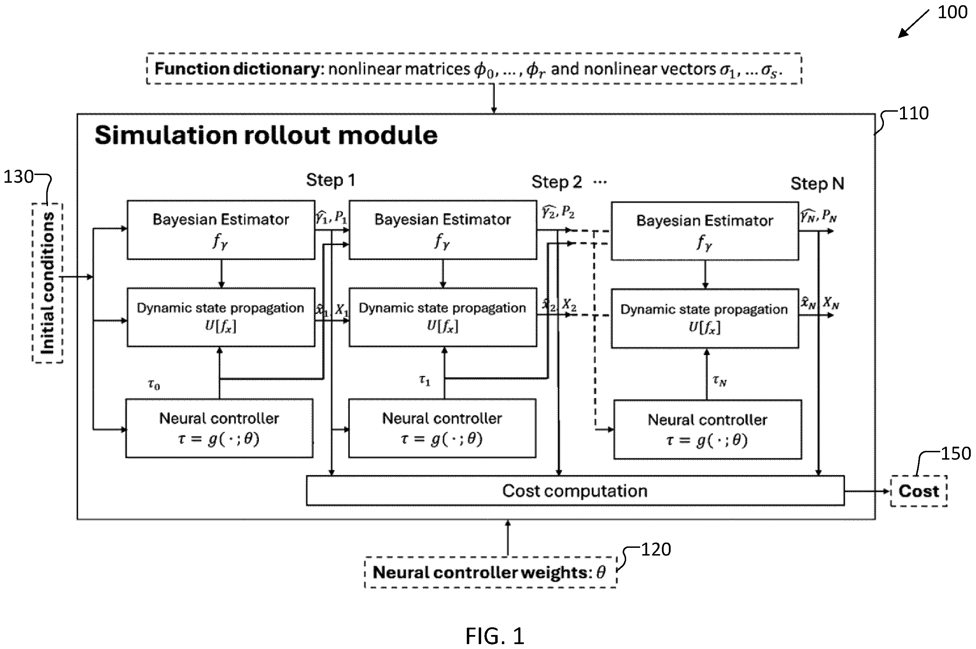

FIG. 1 shows an example training process 100 for training a neural network in a simulation rollout module 110 that may be used by the dynamic modeling system. The dynamic modeling system may take current parameters $\theta$ of the neural controller (e.g., neural controller weights 120) and initial conditions 130 to determine a simulation for the performance of such controller in the closed loop by a rollout process. This is performed by simulating N consecutive steps. In each step, the current state of the system, the state of the robot, and current parameter estimates are updated using the uncertainty propagation for the robot state and the Bayesian estimator for the system parameters. Then, the training process 100 may use such input to compute the next control action using the neural controller. After N steps, the training process 100 may compute the total cost 150 (also called accumulated cost) based on the combination of the cost of compliance toward task completion and the cost of uncertainty reduction (of the movement model).

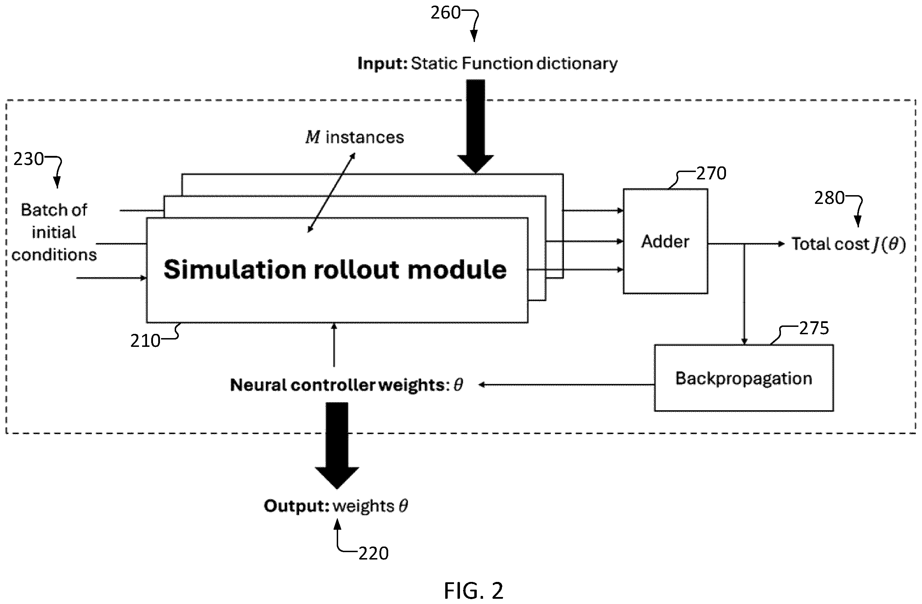

In order to perform the simulation, one or more initial conditions 130 may be needed, and the dynamic modeling system may use a number of different initial conditions 130 for the simulation. This is shown in FIG. 2, which shows an example of how, during training, the dynamic modeling system may try numerous initial conditions, which may help promote generalization of the neural network. The dynamic modeling system may access a batch of initial conditions 230, each one of which may be as the initial condition input (e.g., initial condition 130 of FIG. 1) one simulation rollout module 210 (e.g., simulation rollout module 110 of FIG. 1) (of which there are M instances, each corresponding to one initial condition of the batch of initial conditions 230). The dynamic modeling system may use a set of known static functions from a static function dictionary 260 (e.g., nonlinear matrices $\phi_0, \dots, \phi_r$ and nonlinear vectors $\sigma_1, \dots \sigma_s$) to construct the system matrices *M, C, G.* Hence, after the multiple simulations are run in parallel (e.g., in the GPU) for each M instance of the simulation rollout module 210, all the costs are accumulated into an accumulated cost in adder 270 to arrive at the total cost 280 (also called accumulated cost), and the neural controller weights may be updated using backpropagation 275. It should be noted that there may be a single set of weights $\theta$ for all simulations, which may be refined using all the accumulated experiences. The output of the entire training process may be the final weights vector 220 ($\theta$) that the dynamic modeling system may determine after a predefined number of epochs.

Once the neural network has been trained, the dynamic modeling system may use the neural network while the robot is actively completing a task (e.g., online) without the need to solve the optimization problem at each time point. The dynamic modeling system may accomplish this by (1) at each time point k, measure the state using the sensors to obtain $\hat{x}_k$

with some covariance $X_k$; (2) update the system modeling parameter $\hat{\gamma}_k = f_\gamma(P_{k-1}, \hat{\gamma}_{k-1}, \check{P}_k, \check{\gamma}_k)$ and its covariance $P_k = f_P(P_{k-1}, \check{P}_k)$; (3) read the new reference $x_{\text{ref},k}$; and (4) set the next best motion using $\tau_k = \hat{g}(z_{k-L}, \dots, z_k, x_{\text{ref},k}; \theta)$ with past samples of $z_k = (\hat{x}_k, X_k, \hat{\gamma}_k, P_k)$.

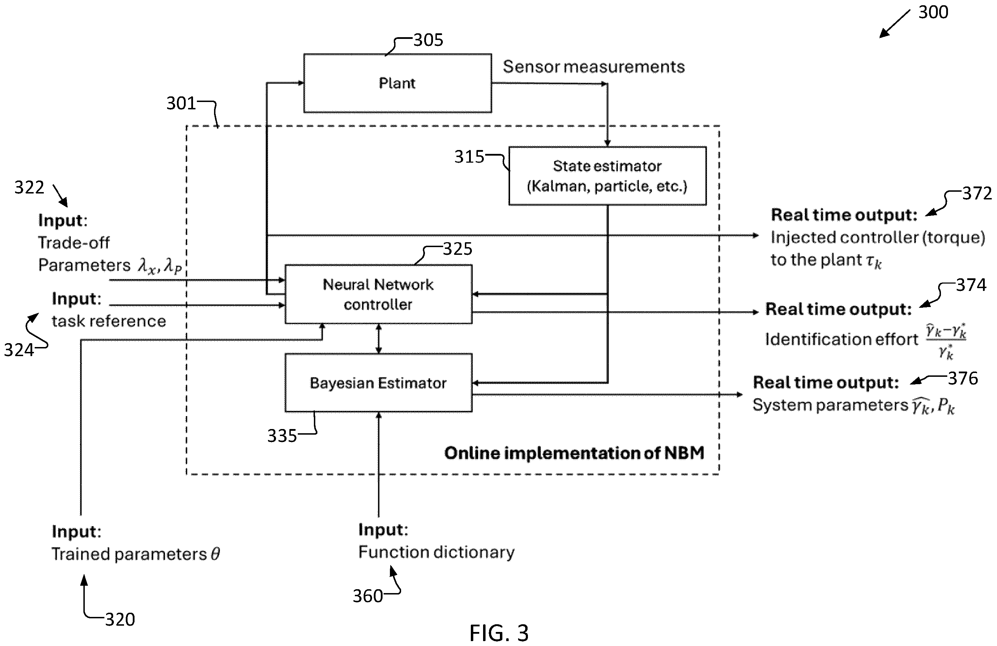

An example of a dynamic modeling system 300 is shown in FIG. 3 that uses an online implementation 301 that may determine system modeling parameters while the robot is performing a task, and based thereon, determine the next best motion (NBM) of the robot. As shown in FIG. 3, the dynamic modeling system 300 may include a neural network controller 325 that be trained to obtain or be provided with trained parameters 320 ($\theta$) and the function dictionary 360 (e.g., function dictionary 260 of FIG. 2). The neural network controller 325 may also receive performance parameters 322 (also called trade-off parameters (e.g., weights) associated with optimization goals such as an extent of compliance toward task completion and an extent of a modeling metric (e.g., an error or estimation error or other estimation metric) in system modeling parameters) as the basis for optimizing the cost function when determining the NBM and ultimately, outputting the control parameters (e.g., injected controller settings 372 (e.g., torques or other actuation settings that are used to drive/excite the robot toward its next state)). The injected controller settings 372 may be provided to the plant 305 whose controller circuitry may actuate the motion of the robot and sensing circuitry of which (e.g., cameras, torque sensors, positional sensors, displacement sensors, accelerometers, etc.) may be provided to a state estimator 315 that may estimate the current state of the robot (e.g., $\hat{x}_k$ and its covariance) within its operating space based on a fusion of the sensor measurements. The estimated current state of the robot may be provided to the neural network 325 for the next best motion determination and/or to the Bayesian estimator 335 (discussed below) for assessing the robot's movement model described by the system modeling parameters.

The inputs of the dynamic modeling system 300 may include the task reference 324 that provides a reference metric for the extent of compliance toward completion of the task of the robot, which may be used by the neural network controller 325 to assess the extent of task compliance/completion. As discussed above, the performance parameters 322 may be associate with a weight (e.g., the weights $\lambda_x$, $\lambda_P$) to be used prioritize the performance parameters when the neural network controller 325 assessing the overall cost of possible motions of the robot. The dynamic modeling system 300 may include a system motion model estimator (e.g., a Bayesian estimator 335) that estimates the system modelling parameters (e.g., system parameters 376) that aim to describe the motion of the robot system in response to stimulation, where the system parameters 376 may have a covariance indicating their error in system modeling parameters. The Bayesian estimator 335 may also output an identification effort 374 for the estimation of the system modeling parameters.

In operation, the dynamic modeling system 300 may select motions for the robot's current task (e.g., while it is on-line) that improve the quality and accuracy of the system modelling parameters for the robot's motion model while also ensuring that the robot continues toward completion of its task. The dynamic modeling system 300 may optimize motion based on performance parameters 322 that may provide a prioritized trade-off between selecting movements that benefit the robot's compliance with task completion and movements that benefit the accuracy, quality, robustness, or other metric of the system modelling parameters. This may help ensure that the robot may effectively perform its tasks while dynamically refining its motion model.

The dynamic modeling system (e.g., dynamic modeling system 300) described above may determine motion for the robot so that it may effectively perform its tasks while also dynamically refining its motion model, offering an improvement over conventional methods. As proof of this concept, a simplified example of the dynamic modeling system shows that it may perform significantly better with respect to estimating system modeling parameters, outperforming a convention method of persistent excitation for estimating system modeling parameters. This is because instead of providing arbitrary or predetermined excitation signals to stimulate a wide array of states, the dynamic modeling system excites the robot system in a way that is more relevant to improving the estimation of system modeling parameters.

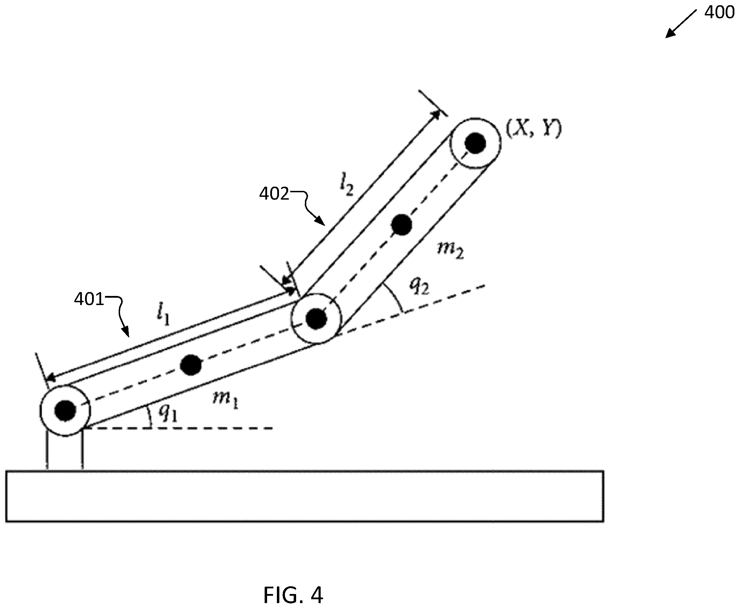

A robot system 400 used for this simplified example is shown in FIG. 4, where the robot system 400 has a manipulator with two degrees of freedom and two segments, where a first segment 401 has a length of $l_1$ and a center of mass of $m_1$ connected to a second segment 402 with a length of $l_2$ and a center of mass of $m_2$. The state of the robot system 400 may be described in terms of at least the angle $q_1$ of the first segment 401 (e.g., relative to its base/horizon), the angle $q2$ of the second segment 402 relative (e.g., relative to the first segment), and the position $(X, Y)$ of the end of the second segment 402.

The system model for robot system 400 may be defined by the matrices $M(q)$, $C(q, \dot{q})$, and $G(q)$:

$$M(q) = \begin{bmatrix} m_1 l_{c1}^2 + m_2(l_1^2 + l_{c2}^2 + 2 l_1 l_{c2}\cos(q_2)) + I_1 + I_2 & m_2(l_{c2}^2 + l_1 l_{c2}\cos(q_2)) + I_2 \\ m_2(l_{c2}^2 + l_1 l_{c2}\cos(q_2)) + I_2 & m_2 l_{c2}^2 + I_2 \end{bmatrix}$$

$$C(q, \dot{q}) = \begin{bmatrix} -2 m_2 l_1 l_{c2}\sin(q_2)\dot{q}_1 \dot{q}_2 - m_2 l_1 l_{c2}\sin(q_2)\dot{q}_2^2 \\ m_2 l_1 l_{c2}\sin(q_2)\dot{q}_1^2 \end{bmatrix}$$

$$G(q) = \begin{bmatrix} (m_1\,l_{c1} + m_2 l_1)\,g\,cos(q_1) + m_2 l_{c2}\,g\,cos(q_1 + q_2) \\ m_2 l_{c2}\,g\,cos(q_1 + q_2) \end{bmatrix}$$

In the above, $l_{c1}, l_{c2}$ are the distances from the center of mass of each link to their respective link and $g = 9.81 m/s^2$ is the gravitational constant. The true parameters may be set to $m_1 = 1$, $m_2 = 1$, $l_1 = 1$, $l_2 = 1$, $l_{c1} = 0.5$, $l_{c2} = 0.5$, $I_1 = 1$, $I_2 = 1$, and thus, the matrices may be written as:

$$M(q) = \alpha_1\phi_1(q) + \cdots + \alpha_5\phi_5(q)$$

$$C(q,\dot{q}) + G(q) = \beta_1\sigma_1(q,\dot{q}) + \beta_8\sigma_8(q,\dot{q}),$$

where

$$\phi_1 = \begin{bmatrix}1 & 0\\0 & 0\end{bmatrix}, \phi_2 = \begin{bmatrix}0 & 1\\0 & 0\end{bmatrix}, \phi_3 = \begin{bmatrix}0 & 0\\1 & 0\end{bmatrix}, \phi_4 = \begin{bmatrix}0 & 0\\0 & 1\end{bmatrix}, \phi_5 = \begin{bmatrix}2cos\,(q_2) & cos\,(q_2)\\cos\,(q_2) & 0\end{bmatrix},$$

$$\sigma_1 = \begin{bmatrix}1\\0\end{bmatrix}, \sigma_2 = \begin{bmatrix}0\\1\end{bmatrix}, \sigma_3 = \begin{bmatrix}sin\,(q_2)\dot{q}_1\,\dot{q}_2\\0\end{bmatrix}, \sigma_4 = \begin{bmatrix}sin(q_2)\dot{q}_2^2\\0\end{bmatrix},$$

$$\sigma_5 = \begin{bmatrix}0\\sin(q_2)\dot{q}_1^2\end{bmatrix}, \sigma_6 = \begin{bmatrix}g\,cos(q_1)\\0\end{bmatrix}, \sigma_7 = \begin{bmatrix}cos(q_1 + q_2)\\0\end{bmatrix}, \sigma_8 = \begin{bmatrix}0\\cos(q_1 + q_2)\end{bmatrix}$$

To estimate the system modeling parameters, the parameters $\gamma = [\alpha_1, ..., \alpha_5, \beta_1, ..., \beta_8]^T$ may be computed with appropriate constants, which depend on $m_1, m_2, l_1, l_2, l_{c1}, l_{c2}, I_1, I_2$. The task for the experiment was for the robot system 400 to simply remain in a given setpoint q = [1,1]$^T$.

For the training stage, the robot system 400 used M = 2000 parallel simulations, with random initial conditions around the setpoint and a horizon of $N$ = 100 steps with time step $\Delta t$ = 0.01. The system modeling parameters were initialized at the origin of robot system 400 and the neural network controller was trained during 1000 epochs with a learning rate of 0.01.

Four experiments were conducted in which system modeling parameters were determined iteratively. The first experiment used persistent excitation of the form $\tau = \tau_r + PE(t)$ where $\tau_r$ is a linear controller to keep the state at the reference and $PE(t)$ is a combination of sinusoidal to excite different modes of the system. The second experiment used a standard controller $\tau = \tau_r$. The third experiment used a dynamic modeling system that includes a neural network controller that optimizes task completion according to performance parameter $\lambda_x$ = 10 and system modeling parameter metric (e.g., error in system modeling parameters) according to performance parameter $\lambda_P$ = 1, in order to give more weight to task completion. The fourth experiment used same the dynamic modeling system and neural network controller but the performance parameters were tuned to $\lambda_x$ = 1 and $\lambda_P$ = 10, in order to give more weight to reducing system modeling parameter error (or other metrics of the model).

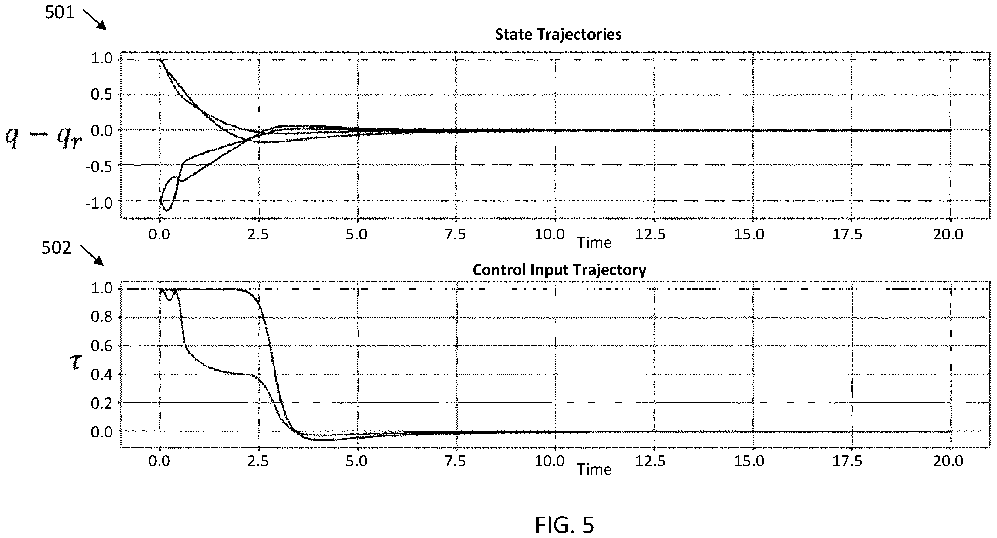

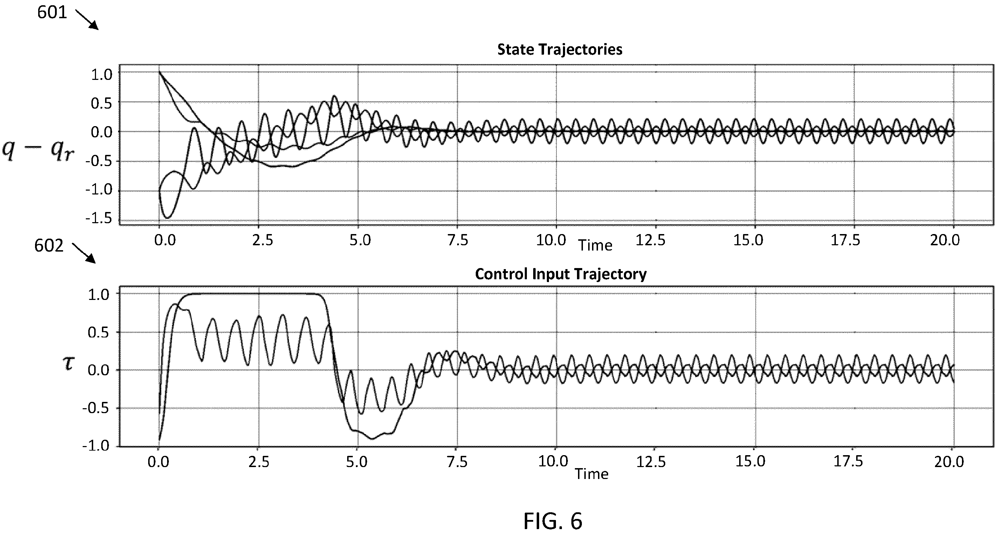

When testing these options, the dynamic modeling system performed better. The results of the third experiment are shown in FIG. 5, where plot 501 shows the robot system's state trajectories (q - $q_r$) over time and plot 502 shows the control input trajectory ($\tau$) over time. The results of the fourth experiment are shown in FIG. 6, where plot 601 shows the robot system's state trajectories (q - $q_r$) over time and the control input trajectory ($\tau$) over time. As seen in plot 601, the state of the robot system reaches/complies with its task reference (e.g., setpoint $q = [1,1]^T$) as is expected because more weight is given to task completion. By contrast, plot 602 shows that the state of the robot system oscillates around the task reference (e.g., setpoint $q = [1,1]^T$). This is also expected because if more weight is given to improving the system modeling parameters, then this promotes more motion to improve the parameter space, covariance, and accuracy of the system modeling parameters because no motion means no accurate estimation.

The overall performance of each experiment is summarized in the following table, averaged over 20 executions of each experiments of 100 seconds:

| Experiment | | Error in Task Completion (error after transient) | Error in System Modeling Parameter Estimation |
|---|---|---|---|
| 1 | Persistent excitation | 1.980 | 0.015 |

(continued)

| Experiment | | Error in Task Completion (error after transient) | Error in System Modeling Parameter Estimation |
|---|---|---|---|
| 2 | Standard controller | 0.023 | 3.431 |
| 3 | Dynamic $\lambda_x = 10$, $\lambda_P = 1$ | 0.024 | 0.782 |
| 4 | Dynamic $\lambda_x = 1$, $\lambda_P = 10$ | 0.252 | 0.011 |

In the table above, the error in task completion is computed as the root mean square (RMS) value of the deviation from (or compliance with) the reference setpoint after the transient. The error in system modeling parameter estimation is computed as the average error after the 100 seconds. As seen in the results, the both the standard controller and the dynamic modeling system perform similarly in terms of error in task completion (and, as expected, the persistent excitation resulted in a high error in task completion because of the arbitrary nature of the excitation with respect to the task). As also seen, the dynamic modeling system perform higher in terms of reducing the error in system modeling parameter estimation, outperforming persistent excitation to develop the system model. This is because instead of the arbitrary excitation signal, the dynamic modeling system excites the robot system in a way that is closer to the best way possible for improving the estimation of system modeling parameters.

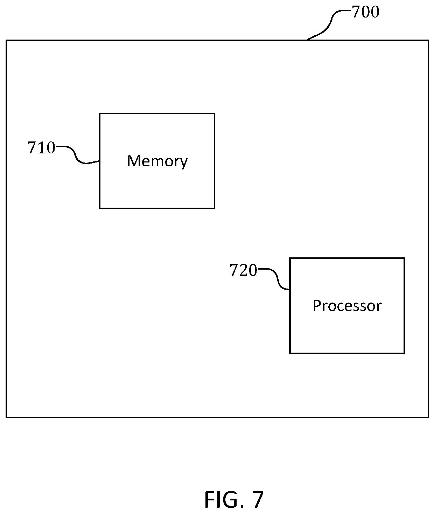

FIG. 7 is a schematic drawing illustrating a device 700 for a dynamic modeling system that dynamically updates a robot's system modeling parameters while the robot is working to complete a task. Device 700 may include any of the features described above with respect to the dynamic modeling system discussed above. The device 700 of FIG. 7 may be implemented as a device, a method, and/or a computer readable medium that, when executed, performs any of the features of the dynamic modeling system described above. It should be understood that device 700 is only an example, and other configurations may be possible that include, for example, different components or additional components.

Device 700 includes a memory 710 that includes instructions stored thereon, where the memory 710 is coupled to a processor 720 that, based on execution of the instructions, is configured to receive a set of performance parameters (e.g., for optimizing objectives) associated with a task of the robot, wherein the set of performance parameters include a first weight associated with an extent of compliance to the task (e.g., towards completion of the task) and a second weight associated with a modeling metric (e.g., an error, quality, robustness, identification effort, etc.) of system modeling parameters of the robot. Processor 720 is further configured to determine control parameters for moving the robot, wherein the control parameters are based on the extent of compliance in relation to the first weight and based on the modeling metric in relation to the second weight. Processor 720 is further configured to control a motion of the robot according to the control parameters

Furthermore, in addition to or in combination with any of the features described in this or the preceding paragraph with respect to device 700, the system modeling parameters may include at least one of a mass, an inertia, a friction coefficient, a gravity on the robot, a Coriolis effect, or a centrifugal effect. Furthermore, in addition to or in combination with any of the features described in this or the preceding paragraph, the system modeling parameters may describe a motion model for representing motion of the robot, wherein the modeling metric indicates the extent to which the motion model accurately represents the motion of the robot. Furthermore, in addition to or in combination with any of the features described in this or the preceding paragraph, the control parameters may include actuator settings for joints of the robot with respect to absolute positions, relative positions, absolute angles, relative angles, displacements, velocities, accelerations, force, or torque of the joints.

Furthermore, in addition to or in combination with any of the features described in this or the preceding two paragraphs with respect to device 700, the modeling metric may include a covariance of the system modeling parameters. Furthermore, in addition to or in combination with any of the features described in this or the preceding two paragraphs, the modeling metric may include an identification effort associated with an estimation of the system modeling parameters. Furthermore, in addition to or in combination with any of the features described in this or the preceding two paragraphs, the extent of compliance may be based on a comparison to an expected reference point for completion of the task. Furthermore, in addition to or in combination with any of the features described in this or the preceding two paragraphs, processor 720 may be configured to iteratively determine the modeling metric and the system modeling parameters over a time sequence, wherein processor 720 may be configured to update, at each point in the time sequence, the system modeling parameters based on a previous modeling metric that is earlier in time in the time sequence.

Furthermore, in addition to or in combination with any of the features described in this or the preceding three paragraphs with respect to device 700, processor 720 may be configured to estimate the system modeling parameters based on a Bayesian estimation, wherein the modeling metric includes an estimation error of the Bayesian estimation. Furthermore, in addition to or in combination with any of the features described in this or the preceding three paragraphs, processor 720 may be configured to determine the control parameters based on a minimization of an accumulated cost, wherein the accumulated cost includes the extent of compliance weighted by the first weight summed with the modeling metric weighted by the second weight. Furthermore, in addition to or in combination with any of the features described in this or the preceding three paragraphs, the minimization of the accumulated cost may include processor 720 configured to determine a lowest accumulated cost from among accumulated costs, each associated with a next motion for the robot, wherein the next motion associated with the lowest accumulated cost includes a next best motion. Furthermore, in addition to or in combination with any of the features described in this or the preceding three paragraphs, the control parameters may be configured to move the robot according to the next best motion.

Furthermore, in addition to or in combination with any of the features described in this or the preceding four paragraphs, the minimization of an accumulated cost may include an output of a learning model that is based on inputs including a current state of the robot, the system modeling parameters, and the set of performance parameters. Furthermore, in addition to or in combination with any of the features described in this or the preceding four paragraphs, processor 720 may be configured to train the learning model according moving the robot along multiple trajectories toward completing the task, wherein each trajectory has a corresponding accumulated cost over the trajectory. Furthermore, in addition to or in combination with any of the features described in this or the preceding four paragraphs, the learning model may include a multilayer perceptron neural network. Furthermore, in addition to or in combination with any of the features described in this or the preceding four paragraphs, processor 720 may be configured to update the learning model based on a backpropagation of the accumulated cost. Furthermore, in addition to or in combination with any of the features described in this or the preceding four paragraphs, the minimization of the accumulated cost may be based on an optimization problem defined as: $\mathrm{argmin}_{\tau_k^*,\ldots\tau_{k+N}^*}\ \sum_{i=k}^{k+N} \lambda_x \left(\hat{x}_i - x_{\mathrm{ref},i}\right)^T Q \left(\hat{x}_i - x_{\mathrm{ref},i}\right) + \mathrm{trace}(\hat{X}_k Q) + \lambda_P \mathrm{trace}(P_i)$.

Furthermore, in addition to or in combination with any of the features described in this or the preceding five paragraphs with respect to device 700, processor 720 may be configured to dynamically determine the system modeling parameters based on the robot performing the task. Furthermore, in addition to or in combination with any of the features described in this or the preceding five paragraphs, the control parameters may include a next best motion setting for the robot towards completing the task, wherein the modeling metric includes an estimation error of the system modeling parameters, wherein the control parameters are based on the extent of compliance multiplied by the first weight summed with the estimation error multiplied by the second weight. Furthermore, in addition to or in combination with any of the features described in this or the preceding five paragraphs, device 700 may further include a controller circuitry coupled to processor 720, wherein the controller circuitry may be configured to receive instructions for the control parameters from the processor and to actuate the motion of the robot.

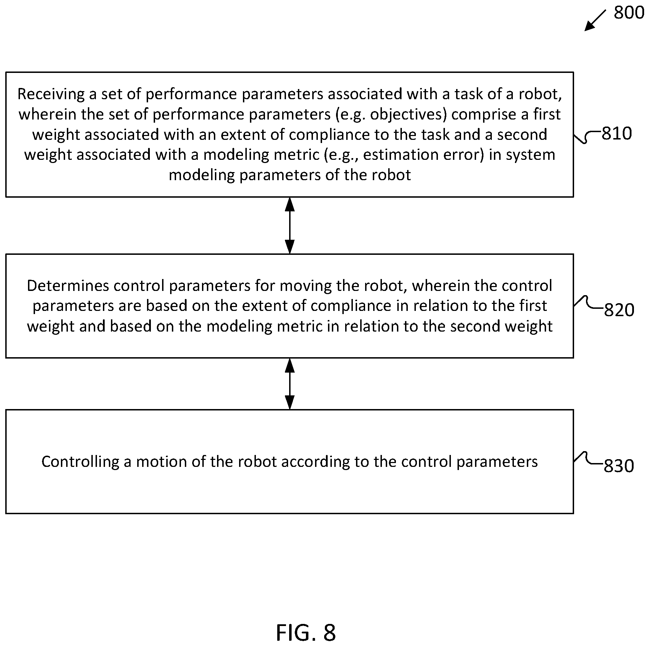

FIG. 8 depicts a schematic flow diagram of a method 800 for a dynamic modeling system that dynamically updates a robot's system modeling parameters while the robot is working to complete a task. Method 800 may implement any of the features of the dynamic modeling system discussed above and/or in FIGs. 1-7. Method 800 includes, in 810, receiving a set of performance parameters (e.g., system objectives to be balanced) associated with a task of a robot, wherein the set of performance parameters comprise a first weight associated with an extent of compliance to the task and a second weight associated with a modeling metric (e.g., modeling error or estimation error) in system modeling parameters of the robot. Method 800 also includes, in 820, determining control parameters for moving the robot, wherein the control parameters are based on the extent of compliance in relation to the first weight and based on the modeling metric in relation to the second weight. Method 800 also include, in 830, controlling a motion of the robot according to the control parameters.

In the following, various examples are provided that may include one or more aspects described above with reference to any of the features of the dynamic modeling system discussed above and/or in FIGs. 1-8. The examples provided in relation to the devices may apply also to the described method(s), and vice versa.

Example 1 is an apparatus for dynamically updating system modeling parameters of a robot. The apparatus includes a memory including instructions stored thereon and a processor that, based on execution of the instructions, is configured to receive a set of performance parameters associated with a task of the robot, wherein the set of performance parameters include a first weight associated with an extent of compliance to the task and a second weight associated with a modeling metric of system modeling parameters of the robot. The processor is also configured to determine control parameters for moving the robot, wherein the control parameters are based on the extent of compliance in relation to the first weight and based on the modeling metric in relation to the second weight. The processor is also configured to control a motion of the robot according to the control parameters.

Example 2 is the apparatus of example 1, wherein the system modeling parameters include at least one of a mass, an inertia, a friction coefficient, a gravity on the robot, a Coriolis effect, or a centrifugal effect.

Example 3 is the apparatus of any one of examples 1 to 2, wherein the system modeling parameters describe a motion model for representing motion of the robot, wherein the modeling metric indicates the extent to which the motion model accurately represents the motion of the robot.

Example 4 is the apparatus of any one of examples 1 to 3, wherein the control parameters include actuator settings for joints of the robot with respect to absolute positions, relative positions, absolute angles, relative angles, displacements, velocities, accelerations, force, or torque of the joints.

Example 5 is the apparatus of any one of examples 1 to 4, the modeling metric includes a covariance of the system modeling parameters.

Example 6 is the apparatus of any one of examples 1 to 5, the modeling metric includes an identification effort associated with an estimation of the system modeling parameters.

Example 7 is the apparatus of any one of examples 1 to 6, wherein the extent of compliance is based on a comparison to an expected reference point for completion of the task.

Example 8 is the apparatus of any one of examples 1 to 7, wherein the processor is configured to iteratively determine the modeling metric and the system modeling parameters over a time sequence, wherein the processor is configured to update, at each point in the time sequence, the system modeling parameters based on a previous modeling metric that is earlier in time in the time sequence.

Example 9 is the apparatus of any one of examples 1 to 8, wherein processor is configured to estimate the system modeling parameters based on a Bayesian estimation, wherein the modeling metric includes an estimation error of the Bayesian estimation.

Example 10 is the apparatus of any one of examples 1 to 9, wherein the processor is configured to determine the control parameters based on a minimization of an accumulated cost, wherein the accumulated cost includes the extent of compliance weighted by the first weight summed with the modeling metric weighted by the second weight.

Example 11 is the apparatus of example 10, wherein the minimization of the accumulated cost includes the processor configured to determine a lowest accumulated cost from among accumulated costs, each associated with a next motion for the robot, wherein the next motion associated with the lowest accumulated cost includes a next best motion.

Example 12 is the apparatus of example 11, wherein the control parameters are configured to move the robot according to the next best motion.

Example 13 is the apparatus of any one of examples 10 to 12, wherein the minimization of an accumulated cost includes an output of a learning model that is based on inputs including a current state of the robot, the system modeling parameters, and the set of performance parameters.

Example 14 is the apparatus of example 13, wherein the processor is configured to train the learning model according moving the robot along multiple trajectories toward completing the task, wherein each trajectory has a corresponding accumulated cost over the trajectory.

Example 15 is the apparatus of any one of examples 13 to 14, wherein the learning model includes a multilayer perceptron neural network.

Example 16 is the apparatus of any one of examples 13 to 15, wherein the processor is configured to update the learning model based on a backpropagation of the accumulated cost.

Example 17 is the apparatus of any one of examples 10 to 16, wherein the minimization of the accumulated cost is based on an optimization problem defined as:

$$\text{argmin}_{\tau_k^*,\dots\tau_{k+N}^*} \sum_{i=k}^{k+N} \lambda_x \left(\hat{x}_i - x_{\text{ref},i}\right)^T Q\left(\hat{x}_i - x_{\text{ref},i}\right) + \text{trace}\left(\hat{X}_k Q\right) + \lambda_P \text{trace}(P_i).$$

Example 18 is the apparatus of any one of examples 1 to 17, wherein the processor is configured to dynamically determine the system modeling parameters based on the robot performing the task.

Example 19 is the apparatus of any one of examples 1 to 18, wherein the control parameters include a next best motion setting for the robot towards completing the task, wherein the modeling metric includes an estimation error of the system modeling parameters, wherein the control parameters are based on the extent of compliance multiplied by the first weight summed with the estimation error multiplied by the second weight.

Example 20 is the apparatus of any one of examples 1 to 19, the apparatus further including a controller circuitry coupled to the processor, wherein the controller circuitry is configured to receive instructions for the control parameters from the processor and to actuate the motion of the robot.

Example 21 is a computer-readable memory including instructions, that, based on execution of the instructions by one or more processors, cause the one or more processors to receive a set of performance parameters associated with a task of a robot, wherein the set of performance parameters include a first weight associated with an extent of compliance to the task and a second weight associated with a modeling metric of system modeling parameters of the robot. The instructions also cause the one or more processors to determine control parameters for moving the robot, wherein the control parameters are based on the extent of compliance in relation to the first weight and based on the modeling metric in relation to the second weight. The instructions also cause the one or more processors to control a motion of the robot according to the control parameters.

Example 22 is the computer-readable memory of example 21, wherein the system modeling parameters include at least one of a mass, an inertia, a friction coefficient, a gravity on the robot, a Coriolis effect, or a centrifugal effect.

Example 23 is the computer-readable memory of any one of examples 21 to 22, wherein the system modeling parameters describe a motion model for representing motion of the robot, wherein the modeling metric indicates the extent to which the motion model accurately represents the motion of the robot.

Example 24 is the computer-readable memory of any one of examples 21 to 23, wherein the control parameters include actuator settings for joints of the robot with respect to absolute positions, relative positions, absolute angles, relative angles, displacements, velocities, accelerations, force, or torque of the j oints.

Example 25 is the computer-readable memory of any one of examples 21 to 24, the modeling metric includes a covariance of the system modeling parameters.

Example 26 is the computer-readable memory of any one of examples 21 to 25, the modeling metric includes an identification effort associated with an estimation of the system modeling parameters.

Example 27 is the computer-readable memory of any one of examples 21 to 26, wherein the extent of compliance is based on a comparison to an expected reference point for completion of the task.

Example 28 is the computer-readable memory of any one of examples 21 to 27, wherein the instructions further cause the one or more processors to iteratively determine the modeling metric and the system modeling parameters over a time sequence, wherein the instructions further cause the one or more processors to update, at each point in the time sequence, the system modeling parameters based on a previous modeling metric that is earlier in time in the time sequence.

Example 29 is the computer-readable memory of any one of examples 21 to 28, wherein the instructions further cause the one or more processors to estimate the system modeling parameters based on a Bayesian estimation, wherein the modeling metric includes an estimation error of the Bayesian estimation.

Example 30 is the computer-readable memory of any one of examples 21 to 29, wherein the instructions further cause the one or more processors to determine the control parameters based on a minimization of an accumulated cost, wherein the accumulated cost includes the extent of compliance weighted by the first weight summed with the modeling metric weighted by the second weight.

Example 31 is the computer-readable memory of example 30, wherein the minimization of the accumulated cost includes that the instructions further cause the processor to determine a lowest accumulated cost from among accumulated costs, each associated with a next motion for the robot, wherein the next motion associated with the lowest accumulated cost includes a next best motion.

Example 32 is the computer-readable memory of example 31, wherein the control parameters are configured to move the robot according to the next best motion.

Example 33 is the computer-readable memory of any one of examples 30 to 32, wherein the minimization of an accumulated cost includes an output of a learning model that is based on inputs including a current state of the robot, the system modeling parameters, and the set of performance parameters.

Example 34 is the computer-readable memory of example 33, wherein the instructions further cause the one or more processors to train the learning model according moving the robot along multiple trajectories toward completing the task, wherein each trajectory has a corresponding accumulated cost over the trajectory.

Example 35 is the computer-readable memory of any one of examples 33 to 34, wherein the learning model includes a multilayer perceptron neural network.

Example 36 is the computer-readable memory of any one of examples 33 to 35, wherein the instructions further cause the one or more processors to update the learning model based on a backpropagation of the accumulated cost.

Example 37 is the computer-readable memory of any one of examples 30 to 36, wherein the minimization of the accumulated cost is based on an optimization problem defined as:

$$\text{argmin}_{\tau^*_{k},\dots\tau^*_{k+N}} \sum_{i=k}^{k+N} \lambda_x (\hat{x}_i - x_{\text{ref},i})^T Q (\hat{x}_i - x_{\text{ref},i}) + \text{trace}(\hat{X}_k Q) + \lambda_P \text{trace}(P_i).$$

Example 38 he computer-readable memory of any one of examples 21 to 37, wherein the instructions further cause the one or more processors to dynamically determine the system modeling parameters based on the robot performing the task.

Example 39 is the computer-readable memory of any one of examples 21 to 38, wherein the control parameters include a next best motion setting for the robot towards completing the task, wherein the modeling metric includes an estimation error of the system modeling parameters, wherein the control parameters are based on the extent of compliance multiplied by the first weight summed with the estimation error multiplied by the second weight.

Example 40 is the computer-readable memory of any one of examples 21 to 39, wherein the instructions further cause the one or more processors to actuate, via a controller circuitry, the motion of the robot.

Example 41 is a method for dynamically updating system modeling parameters of a robot. The method includes receiving a set of performance parameters associated with a task of the robot, wherein the set of performance parameters include a first weight associated with an extent of compliance to the task and a second weight associated with a modeling metric of system modeling parameters of the robot. The method also includes determining control parameters for moving the robot, wherein the control parameters are based on the extent of compliance in relation to the first weight and based on the modeling metric in relation to the second weight. The method also includes controlling a motion of the robot according to the control parameters.

Example 42 is the method of example 41, wherein the system modeling parameters include at least one of a mass, an inertia, a friction coefficient, a gravity on the robot, a Coriolis effect, or a centrifugal effect.

Example 43 is the method of any one of examples 41 to 42, wherein the system modeling parameters describe a motion model for representing motion of the robot, wherein the modeling metric indicates the extent to which the motion model accurately represents the motion of the robot.

Example 44 is the method of any one of examples 41 to 43, wherein the control parameters include actuator settings for joints of the robot with respect to absolute positions, relative positions, absolute angles, relative angles, displacements, velocities, accelerations, force, or torque of the joints.

Example 45 is the method of any one of examples 41 to 44, the modeling metric includes a covariance of the system modeling parameters.

Example 46 is the method of any one of examples 41 to 45, the modeling metric includes an identification effort associated with an estimation of the system modeling parameters.

Example 47 is the method of any one of examples 41 to 46, wherein the extent of compliance is based on a comparison to an expected reference point for completion of the task.

Example 48 is the method of any one of examples 41 to 47, the method further including iteratively determining the modeling metric and the system modeling parameters over a time sequence. The method further includes updating, at each point in the time sequence, the system modeling parameters based on a previous modeling metric that is earlier in time in the time sequence.

Example 49 is the method of any one of examples 41 to 48, the method further including estimating the system modeling parameters based on a Bayesian estimation, wherein the modeling metric includes an estimation error of the Bayesian estimation.

Example 50 is the method of any one of examples 41 to 49, the method further includes determining the control parameters based on a minimization of an accumulated cost, wherein the accumulated cost includes the extent of compliance weighted by the first weight summed with the modeling metric weighted by the second weight.

Example 51 is the method of example 50, wherein the minimization of the accumulated cost includes determining a lowest accumulated cost from among accumulated costs, each associated with a next motion for the robot, wherein the next motion associated with the lowest accumulated cost includes a next best motion.

Example 52 is the method of example 51, wherein the control parameters are configured to move the robot according to the next best motion.

Example 53 is the method of any one of examples 50 to 52, wherein the minimization of an accumulated cost includes an output of a learning model that is based on inputs including a current state of the robot, the system modeling parameters, and the set of performance parameters.

Example 54 is the method of example 53, the method further including training the learning model according moving the robot along multiple trajectories toward completing the task, wherein each trajectory has a corresponding accumulated cost over the trajectory.

Example 55 is the method of any one of examples 53 to 54, wherein the learning model includes a multilayer perceptron neural network.

Example 56 is the method of any one of examples 53 to 55, the method further including updating the learning model based on a backpropagation of the accumulated cost.

Example 57 is the method of any one of examples 50 to 56, wherein the minimization of the accumulated cost is based on an optimization problem defined as:

$$\operatorname{argmin}_{\tau_k^*, \dots \tau_{k+N}^*} \sum_{i=k}^{k+N} \lambda_x (\hat{x}_i - x_{\text{ref},i})^T Q (\hat{x}_i - x_{\text{ref},i}) + \text{trace}(\hat{X}_k Q) + \lambda_P \text{trace}(P_i).$$

Example 58 is the method of any one of examples 41 to 57, the method further including dynamically determining the system modeling parameters based on the robot performing the task.

Example 59 is the method of any one of examples 41 to 58, wherein the control parameters include a next best motion setting for the robot towards completing the task, wherein the modeling metric includes an estimation error of the system modeling parameters, wherein the control parameters are based on the extent of compliance multiplied by the first weight summed with the estimation error multiplied by the second weight.

Example 60 is the method of any one of examples 41 to 59, the method further including actuating (e.g., via controller circuitry) the motion of the robot.

Example 61 is a device for dynamically updating system modeling parameters of a robot. The device includes a means for receiving a set of performance parameters associated with a task of the robot, wherein the set of performance parameters include a first weight associated with an extent of compliance to the task and a second weight associated with a modeling metric of system modeling parameters of the robot. The device also includes a means for determining control parameters for moving the robot, wherein the control parameters are based on the extent of compliance in relation to the first weight and based on the modeling metric in relation to the second weight. The device also includes a means for controlling a motion of the robot according to the control parameters.

Example 62 is the device of example 61, wherein the system modeling parameters include at least one of a mass, an inertia, a friction coefficient, a gravity on the robot, a Coriolis effect, or a centrifugal effect.

Example 63 is the device of any one of examples 61 to 62, wherein the system modeling parameters describe a motion model for representing motion of the robot, wherein the modeling metric indicates the extent to which the motion model accurately represents the motion of the robot.

Example 64 is the device of any one of examples 61 to 63, wherein the control parameters include actuator settings for joints of the robot with respect to absolute positions, relative positions, absolute angles, relative angles, displacements, velocities, accelerations, force, or torque of the joints.

Example 65 is the device of any one of examples 61 to 64, the modeling metric includes a covariance of the system modeling parameters.

Example 66 is the device of any one of examples 61 to 65, the modeling metric includes an identification effort associated with an estimation of the system modeling parameters.

Example 67 is the device of any one of examples 61 to 66, wherein the extent of compliance is based on a comparison to an expected reference point for completion of the task.

Example 68 is the device of any one of examples 61 to 67, the device further including a means for iteratively determining the modeling metric and the system modeling parameters over a time sequence. The device further includes a means for updating, at each point in the time sequence, the system modeling parameters based on a previous modeling metric that is earlier in time in the time sequence.

Example 69 is the device of any one of examples 61 to 68, the device further including a means for estimating the system modeling parameters based on a Bayesian estimation, wherein the modeling metric includes an estimation error of the Bayesian estimation.

Example 70 is the device of any one of examples 61 to 69, the device further including a means for determining the control parameters based on a minimization of an accumulated cost, wherein the accumulated cost includes the extent of compliance weighted by the first weight summed with the modeling metric weighted by the second weight.

Example 71 is the device of example 70, wherein the minimization of the accumulated cost includes determining a lowest accumulated cost from among accumulated costs, each associated with a next motion for the robot, wherein the next motion associated with the lowest accumulated cost includes a next best motion.

Example 72 is the device of example 71, wherein the control parameters are configured to move the robot according to the next best motion.

Example 73 is the device of any one of examples 70 to 72, wherein the minimization of an accumulated cost includes an output of a learning model that is based on inputs including a current state of the robot, the system modeling parameters, and the set of performance parameters.

Example 74 is the device of example 73, the device further including a means for training the learning model according moving the robot along multiple trajectories toward completing the task, wherein each trajectory has a corresponding accumulated cost over the trajectory.

Example 75 is the device of any one of examples 73 to 74, wherein the learning model includes a multilayer perceptron neural network.

Example 76 is the device of any one of examples 73 to 75, the device further including a means for updating the learning model based on a backpropagation of the accumulated cost.

Example 77 is the device of any one of examples 70 to 76, wherein the minimization of the accumulated cost is based on an optimization problem defined as:

$$\text{argmin}_{\tau_k^*,\dots\tau_{k+N}^*} \sum_{i=k}^{k+N} \lambda_x \big(\hat{x}_i - x_{\text{ref},i}\big)^T Q \big(\hat{x}_i - x_{\text{ref},i}\big) + \text{trace}\big(\hat{X}_k Q\big) + \lambda_P \text{trace}(P_i).$$

Example 78 is the device of any one of examples 61 to 77, the device further including a means for dynamically determining the system modeling parameters based on the robot performing the task.

Example 79 is the device of any one of examples 61 to 78, wherein the control parameters include a next best motion setting for the robot towards completing the task, wherein the modeling metric includes an estimation error of the system modeling parameters, wherein the control parameters are based on the extent of compliance multiplied by the first weight summed with the estimation error multiplied by the second weight.

Example 80 is the device of any one of examples 61 to 79, the device further including a means for actuating (e.g., via controller circuitry) the motion of the robot.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

**Claims**

1. An apparatus for dynamically updating system modeling parameters of a robot:

   a memory comprising instructions stored thereon; and
   a processor that, based on execution of the instructions, is configured to:

   receive a set of performance parameters associated with a task of the robot, wherein the set of performance parameters comprise a first weight associated with an extent of compliance to the task and a second weight associated with a modeling metric of system modeling parameters of the robot;
   determine control parameters for moving the robot, wherein the control parameters are based on the extent of compliance in relation to the first weight and based on the modeling metric in relation to the second weight; and
   control a motion of the robot according to the control parameters.

2. The apparatus of claim 1, wherein the system modeling parameters comprise at least one of a mass, an inertia, a friction coefficient, a gravity on the robot, a Coriolis effect, or a centrifugal effect.

3. The apparatus of any one of claims 1 to 2, wherein the system modeling parameters describe a motion model for representing motion of the robot, wherein the modeling metric indicates the extent to which the motion model accurately represents the motion of the robot.

4. The apparatus of any one of claims 1 to 3, wherein the control parameters comprise actuator settings for joints of the robot with respect to absolute positions, relative positions, absolute angles, relative angles, displacements, velocities, accelerations, force, or torque of the joints.

5. The apparatus of any one of claims 1 to 4, the modeling metric comprises a covariance of the system modeling parameters or an identification effort associated with an estimation of the system modeling parameters.

6. The apparatus of any one of claims 1 to 5, wherein the extent of compliance is based on a comparison to an expected reference point for completion of the task.

7. The apparatus of any one of claims 1 to 6, wherein the processor is configured to iteratively determine the modeling metric and the system modeling parameters over a time sequence, wherein the processor is configured to update, at each point in the time sequence, the system modeling parameters based on a previous modeling metric that is earlier in time in the time sequence.

8. The apparatus of any one of claims 1 to 7, wherein processor is configured to estimate the system modeling parameters based on a Bayesian estimation, wherein the modeling metric comprises an estimation error of the Bayesian estimation.

9. The apparatus of any one of claims 1 to 8, wherein the processor is configured to determine the control parameters based on a minimization of an accumulated cost, wherein the accumulated cost comprises the extent of compliance weighted by the first weight summed with the modeling metric weighted by the second weight.

10. The apparatus of claim 9, wherein the minimization of the accumulated cost comprises the processor configured to determine a lowest accumulated cost from among accumulated costs, each associated with a next motion for the robot, wherein the next motion associated with the lowest accumulated cost comprises a next best motion, wherein the control parameters are configured to move the robot according to the next best motion.

11. The apparatus of any one of claims 8 to 10, wherein the minimization of an accumulated cost comprises an output of a learning model that is based on inputs comprising a current state of the robot, the system modeling parameters, and the set of performance parameters.

12. The apparatus of claim 11, wherein the processor is configured to train the learning model according moving the robot along multiple trajectories toward completing the task, wherein each trajectory has a corresponding accumulated cost over the trajectory.

13. The apparatus of any one of claims 9 to 12, wherein the minimization of the accumulated cost is based on an optimization problem defined as:

$$\text{argmin}_{\tau_k^*,\ldots\tau_{k+N}^*} \sum_{i=k}^{k+N} \lambda_x \left(\hat{x}_i - x_{\text{ref},i}\right)^T Q\left(\hat{x}_i - x_{\text{ref},i}\right) + \text{trace}\left(\hat{X}_k Q\right) + \lambda_P \text{trace}(P_i).$$

14. A method for dynamically updating system modeling parameters of a robot based on the robot performing a task:

receiving a set of performance parameters associated with the task of the robot, wherein the set of performance parameters comprise a first weight associated with an extent of compliance to the task and a second weight associated with a modeling metric of system modeling parameters of the robot;
determining control parameters for moving the robot, wherein the control parameters are based on the extent of compliance in relation to the first weight and based on the modeling metric in relation to the second weight; and
controlling a motion of the robot according to the control parameters.

15. The method of claim 14, wherein the control parameters comprise a next best motion setting for the robot towards completing the task, wherein the modeling metric comprises an estimation error of the system modeling parameters, wherein the control parameters are based on the extent of compliance multiplied by the first weight summed with the estimation error multiplied by the second weight.

FIG. 1

FIG. 2

FIG. 3

FIG. 4

501

State Trajectories

$q - q_r$

Time

502

Control Input Trajectory

$\tau$

Time

FIG. 5

EP 4 768 195 A1

FIG. 6

EP 4 768 195 A1

700

710 — Memory

720 — Processor

FIG. 7

Receiving a set of performance parameters associated with a task of a robot, wherein the set of performance parameters (e.g. objectives) comprise a first weight associated with an extent of compliance to the task and a second weight associated with a modeling metric (e.g., estimation error) in system modeling parameters of the robot — 810

Determines control parameters for moving the robot, wherein the control parameters are based on the extent of compliance in relation to the first weight and based on the modeling metric in relation to the second weight — 820

Controlling a motion of the robot according to the control parameters — 830

800

FIG. 8

# EUROPEAN SEARCH REPORT

**Application Number**

EP 24 22 3180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/127583 A1 (CHAREST-FINN MEAGHAN [CA] ET AL) 27 April 2023 (2023-04-27) | 1-4,6,7, 9-15 | INV. B25J9/16 |
| Y | * paragraph [0047] - paragraph [0106] * * figures 2-5, 13, 32-34 * | 5,8 | G05B13/04 |
| | ----- | | |
| Y | US 2023/038215 A1 (MENNER MARCEL [US] ET AL) 9 February 2023 (2023-02-09) | 5,8 | |
| A | * paragraph [0019] - paragraph [0116] * * figures 1, 2B, 8A * | 1-4,6,7, 9,10, 13-15 | |
| | ----- | | |
| A | LU TIANXIANG ET AL: "Robust Data-driven Model Predictive Control via On-policy Reinforcement Learning for Robot Manipulators", 2024 IEEE 7TH INTERNATIONAL CONFERENCE ON INDUSTRIAL CYBER-PHYSICAL SYSTEMS (ICPS), IEEE, 12 May 2024 (2024-05-12), pages 1-6, XP034680955, DOI: 10.1109/ICPS59941.2024.10640002 [retrieved on 2024-08-26] * the whole document * | 1-7,9-14 | |
| | ----- | | |

**TECHNICAL FIELDS SEARCHED (IPC)**

B25J
G05B

The present search report has been drawn up for all claims

| Place of search | Date of completion of the search | Examiner |
|---|---|---|
| The Hague | 10 June 2025 | Zake, Zane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 22 3180

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 2023127583 A1 | 27-04-2023 | CA 3169829 A1 | 02-09-2021 |
|  |  | US 2023127583 A1 | 27-04-2023 |
|  |  | WO 2021168590 A1 | 02-09-2021 |
| US 2023038215 A1 | 09-02-2023 | CN 117716302 A | 15-03-2024 |
|  |  | EP 4381353 A1 | 12-06-2024 |
|  |  | JP 2024524771 A | 05-07-2024 |
|  |  | US 2023038215 A1 | 09-02-2023 |

EPO FORM P0459

For more details about this annex : see Official Journal of the European Patent Office, No. 12/82